# DEMANDE DE BREVET EUROPEEN

(11) **EP 4 280 395 A1**
(43) Date de publication de la demande: **22.11.2023**
(21) Numéro de dépôt: 23174262.8
(22) Date de dépôt: 19.05.2023
(51) Int. Cl.: H01R 13/66, H04W 4/10, H01R 31/06, H04B 1/38, H03M 1/00, H01R 13/7193

(54) **CONNECTEUR ÉLECTRIQUE MILITARISÉ DESTINÉ À ÊTRE CONNECTÉ À UN ÉQUIPEMENT AUDIO, CÂBLE DE CONNEXION ET SYSTÈME AUDIO ASSOCIÉS**

(30) Priorité: 20.05.2022 FR 2204850
(71) Demandeur: Elno, 95100 Argenteuil (FR)
(72) Inventeur: BEN HELLAL, Khaled, 95100 Argenteuil (FR); BARON, Guillaume, 76240 Le Mesnil-Esnard (FR); SEPREY, Mathieu, 95130 Franconville (FR); CLOWEZ, Eric, Bernard, Jacques, 92270 Bois-Colombes (FR); GAIFFE, Thierry, 78100 Saint-Germain-en-Laye (FR)
(74) Mandataire: Lavoix

(57) **Abrégé**

Ce connecteur électrique militarisé (40), destiné à être connecté à un équipement audio, comprend :
- plusieurs organes de contact électrique (42), au moins un organe de contact électrique (42) étant apte à faire circuler un signal audio analogique ;
- un corps de connecteur (44), à l'intérieur duquel sont agencés les organes de contact électrique (42) ;
- un raccord arrière (46), fixé de manière amovible au corps de connecteur (44) ; et
- un convertisseur analogique-numérique relié à l'au moins un organe de contact électrique (42) apte à faire circuler un signal audio analogique, le convertisseur analogique-numérique étant configuré pour convertir chaque signal audio analogique en un signal numérique conforme à une norme prédéfinie de communication numérique, le convertisseur analogique-numérique étant agencé à l'intérieur du raccord arrière (46).

## Description

La présente invention concerne un connecteur électrique militarisé, destiné à être connecté à un équipement audio. Le connecteur électrique comprend plusieurs organes de contact électrique, au moins un organe de contact électrique étant apte à faire circuler un signal audio analogique ; un corps de connecteur, à l'intérieur duquel sont agencés les organes de contact électrique ; et un raccord arrière, fixé de manière amovible au corps de connecteur.

L'invention concerne également un câble de connexion d'un équipement audio avec un appareil électronique d'interconnexion, le câble de connexion comprenant un tel connecteur configuré pour être couplé avec un connecteur complémentaire équipant l'équipement audio.

L'invention concerne aussi un système audio destiné à équiper un opérateur, notamment un fantassin, le système comprenant un équipement audio et un appareil électronique d'interconnexion connecté à l'équipement audio via un tel câble de connexion ; l'appareil électronique d'interconnexion étant destiné à être connecté à au moins un autre équipement audio. Chaque équipement audio est une radio, ou un système d'intercommunication, ou encore un équipement de tête comportant au moins un élément parmi un microphone et un module de restitution audio.

On connaît un connecteur électrique militarisé du type précité. Un tel connecteur est par exemple conforme à la norme DEFENSE GAM T2 ; ou à la norme MIL-C-55116, aussi notée MIL-DTL- 55116C ; ou encore à la norme MIL-C-10544A.

Le connecteur électrique militarisé forme typiquement l'une des extrémités d'un câble de connexion servant à connecter un équipement audio avec un appareil électronique d'interconnexion.

Le document EP 2 845 115 B1 décrit un tel appareil électronique interconnexion, cet appareil étant également appelé dispositif PTT (de l'anglais *Push-To-Talk*). Un tel dispositif PTT comporte alors au moins un bouton d'appui pour parler, c'est-à-dire un bouton PTT, configuré pour - suite à une action de l'utilisateur - autoriser l'émission d'un signal audio, en particulier sur un canal préalablement associé au bouton PTT.

Ce dispositif PTT comprend plusieurs ports analogiques de communication, chacun étant apte à être relié à un équipement audio respectif, et le document précité concerne alors plus précisément des câbles particuliers de raccordement des équipements audio au dispositif PTT, chaque câble comportant une mémoire de stockage d'informations relatives à l'équipement audio associé audit câble, afin de faciliter l'association de chaque équipement audio avec le dispositif PTT.

Toutefois, ce dispositif PTT avec de tels câbles de raccordement n'est pas très pratique d'usage, puisqu'il nécessite notamment de stocker préalablement dans chaque câble les informations relatives aux différents équipements audio.

Le but de l'invention est alors de proposer un connecteur électrique militarisé permettant de faciliter l'interconnexion des différents équipements audio, notamment avec l'appareil d'interconnexion.

A cet effet, l'invention a pour objet un connecteur électrique militarisé, destiné à être connecté à un équipement audio, le connecteur électrique comprenant :
- plusieurs organes de contact électrique, au moins un organe de contact électrique étant apte à faire circuler un signal audio analogique ;
- un corps de connecteur, à l'intérieur duquel sont agencés les organes de contact électrique ;
- un raccord arrière, fixé de manière amovible au corps de connecteur ; et
- un convertisseur analogique-numérique relié à l'au moins un organe de contact électrique apte à faire circuler un signal audio analogique, le convertisseur analogique-numérique étant configuré pour convertir chaque signal audio analogique en un signal numérique conforme à une norme prédéfinie de communication numérique, le convertisseur analogique-numérique étant agencé à l'intérieur du raccord arrière.

Avec le connecteur électrique selon l'invention, le convertisseur analogique-numérique permet d'effectuer la conversion de signaux audio en signaux numériques conformes à la norme prédéfinie de communication numérique, et permet alors de faciliter la connexion de l'équipement audio à l'appareil électronique d'interconnexion, en particulier à un port de communication de ce dernier qui est conforme à ladite norme de communication numérique.

Le connecteur électrique selon l'invention permet notamment de connecter l'équipement audio de type analogique au port de communication de type numérique de l'appareil électronique d'interconnexion.

L'équipement audio est aussi apte à échanger, via le connecteur électrique selon l'invention et suivant la norme de communication numérique, des informations d'initialisation appropriées avec l'appareil d'interconnexion.

Suivant d'autres aspects avantageux de l'invention, le connecteur électrique militarisé comprend une ou plusieurs des caractéristiques suivantes, prises isolément ou suivant toutes les combinaisons techniquement possibles :
- la norme prédéfinie de communication numérique est une norme USB, le convertisseur analogique-numérique étant un convertisseur analogique-USB ;
- la norme USB est choisie parmi le groupe consistant en : USB 2.0 ; USB audio class 1.0 ; et USB HID ;
- le connecteur comprend en outre au moins un filtre de compatibilité électromagnétique connecté entre le convertisseur analogique-numérique et au moins un organe de contact électrique correspondant, chaque filtre de compatibilité électromagnétique étant configuré pour protéger le convertisseur analogique-numérique contre une perturbation électromagnétique circulant via ledit au moins un organe de contact électrique ;

le connecteur comprenant de préférence en outre un blindage électromagnétique entourant le convertisseur analogique-numérique et chaque filtre de compatibilité électromagnétique, le blindage électromagnétique formant une cage de Faraday autour du convertisseur analogique-numérique et de chaque filtre de compatibilité électromagnétique ;
   - chaque filtre de compatibilité électromagnétique comporte un condensateur et une bobine électromagnétique connectés en série ;
chaque filtre de compatibilité électromagnétique comportant de préférence en outre un composant de protection connecté entre ledit au moins un organe de contact électrique et une masse électrique ;
le composant de protection comportant de préférence encore au moins une bobine électromagnétique ou une ferrite ;
   - un organe de contact électrique est configuré pour faire transiter au moins un signal d'appui pour parler pour l'autorisation d'émission d'un signal audio, et le convertisseur analogique-numérique comprend en outre un module de gestion configuré pour gérer chaque signal d'appui pour parler transitant via ledit organe de contact électrique ;
le module de gestion étant de préférence configuré pour convertir un signal d'appui pour parler reçu selon la norme prédéfinie de communication numérique en une commande tout ou rien, telle qu'une commande tout ou rien sur des transistors MOS à drain ouvert ; et inversement pour convertir un signal d'appui pour parler reçu d'une entrée tout ou rien en un signal selon la norme prédéfinie de communication numérique ;
   - le connecteur est conforme à une norme choisie parmi le groupe consistant en : DEFENSE GAM T2, MIL-C-55116, et MIL-C-10544A ; et
   - le raccord arrière présente une forme droite ou une forme coudée.

L'invention concerne également un câble de connexion d'un équipement audio avec un appareil électronique d'interconnexion, le câble de connexion comprenant :
- un premier connecteur configuré pour être couplé avec un premier connecteur complémentaire équipant l'équipement audio ;
- un deuxième connecteur configuré pour être couplé avec un deuxième connecteur complémentaire équipant l'appareil électronique d'interconnexion ;
- un ensemble de conducteurs électriques reliant le premier connecteur au deuxième connecteur ;
le premier connecteur étant tel que défini ci-dessus, et le deuxième connecteur étant conforme à la norme prédéfinie de communication numérique.

L'invention concerne aussi un système audio destiné à équiper un opérateur, notamment un fantassin, le système audio comprenant :
- un équipement audio ; et
- un appareil électronique d'interconnexion connecté à l'équipement audio via un câble de connexion, l'appareil électronique d'interconnexion étant destiné à être connecté à au moins un autre équipement audio ;

chaque équipement audio étant choisi parmi le groupe consistant en : une radio, un système d'intercommunication, et un équipement de tête comportant au moins un élément parmi un microphone et un module de restitution audio ;
le câble de connexion étant tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

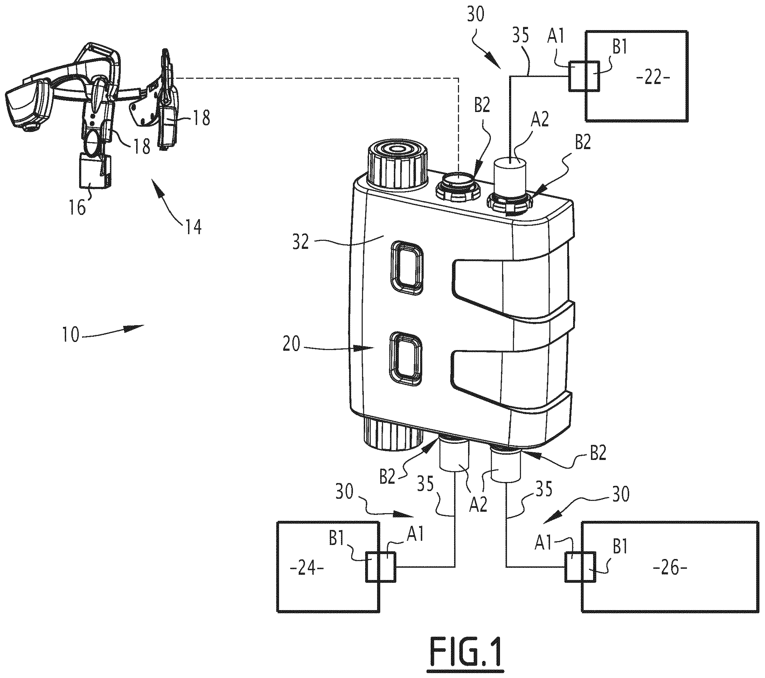

[Fig. 1] la figure 1 est une représentation schématique d'un système audio selon l'invention destiné à équiper un opérateur, tel qu'un fantassin, le système comprenant un appareil électronique d'interconnexion, représenté en perspective, et un ou plusieurs équipements audio, tels qu'un équipement de tête, une première radio, une deuxième radio et un système d'intercommunication ; l'appareil d'interconnexion étant connecté à l'équipement de tête et à chacun des autres équipements audio via des câbles de connexion respectifs, chaque câble de connexion comportant un premier connecteur couplé avec un premier connecteur complémentaire équipant l'équipement audio, un deuxième connecteur couplé avec un deuxième connecteur complémentaire équipant l'appareil d'interconnexion, et un ensemble de conducteurs électriques reliant le premier connecteur au deuxième connecteur ; et
[Fig. 2] la figure 2 est une vue agrandie d'un connecteur électrique militarisé selon un premier mode de réalisation de l'invention, ce connecteur formant le premier connecteur d'au moins un câble de connexion de la figure 1 ;
[Fig. 3] la figure 3 est un synoptique schématique du connecteur électrique militarisé selon l'invention ; et
[Fig. 4] la figure 4 est une vue analogue à celle de la figure 2, selon un deuxième mode de réalisation de l'invention.

Sur la figure 1, un système audio 10 est destiné à équiper un opérateur, notamment un fantassin, non représenté.

Le système audio 10 comprend un équipement de tête 14 comportant au moins un élément parmi un microphone 16 et un module de restitution audio 18 ; et un appareil électronique d'interconnexion 20 connecté à l'équipement de tête 14 et destiné à être connecté à au moins un autre équipement audio choisi parmi une radio 22, 24 et un système d'intercommunication 26.

Dans l'exemple de la figure 1, le système audio 10 comprend deux radios, à savoir une première radio 22 et une deuxième radio 24, ainsi que le système d'intercommunication 26. La première radio 22, la deuxième radio 24 et le système d'intercommunication 26 sont connus en soi.

Dans l'exemple de la figure 1, l'appareil électronique d'interconnexion 20, appelé appareil d'interconnexion 20 par la suite, est alors connecté, d'une part, à l'équipement de tête 14, et d'autre part, à chacun des autres équipements audio, à savoir à la première radio 22, à la deuxième radio 24 et au système d'intercommunication 26, chacune de ces connexions étant effectuée via un câble de connexion 30 respectif.

L'équipement de tête 14 et l'appareil d'interconnexion 20 sont configurés pour être portés par l'opérateur, l'appareil d'interconnexion 20 étant typiquement porté sur la poitrine gauche de l'opérateur, ou bien sur sa poitrine droite.

La première radio 22 et la deuxième radio 24 sont également susceptibles d'être portées par l'opérateur, ou bien sont alternativement positionnées dans un véhicule, non représenté, à l'intérieur duquel se trouve l'opérateur. Le système d'intercommunication 26 est de préférence positionné dans ledit véhicule. En variante, le système d'intercommunication 26 est aussi susceptible d'être porté par l'opérateur.

L'équipement de tête 14 est connu en soi, et comporte de préférence au moins un microphone 16 et deux modules de restitution audio 18. Un exemple d'un tel équipement de tête 14 est décrit dans le document FR 3 019 422 A1 publié le 2 octobre 2015.

Dans l'exemple de la figure 1, le microphone 16 est également appelé microphone ostéophonique et est apte à recevoir par conduction osseuse des oscillations vibratoires et à les transformer en un signal électrique respectif. Dans cet exemple, chaque module de restitution audio 18 est un module ostéophonique, et comporte notamment un transducteur d'excitation mécanique osseuse, apte à transformer un signal électrique reçu en onde vibratoire représentative d'un signal sonore et à les transmettre au nerf auditif de l'opérateur par conduction osseuse.

En variante, le microphone 16 est un microphone aérien apte à recevoir des ondes sonores acoustiques et à les transformer en un signal électrique respectif.

En variante encore, chaque module de restitution audio 18 est un module acoustique comportant un haut-parleur apte à transformer un signal électrique reçu en ondes sonores, et à les transmettre alors au nerf auditif de l'opérateur par conduction aérienne à travers son oreille respective, notamment à travers son conduit auditif.

L'appareil d'interconnexion 20 est configuré pour interconnecter plusieurs équipements audio 14, 22, 24, 26, et comprend alors plusieurs ports internes de communication, non représentés, chacun étant configuré pour être relié à un équipement audio 14, 22, 24, 26 respectif.

En complément, l'appareil d'interconnexion 20 comprend un boîtier 32 et plusieurs connecteurs B2, également appelés par la suite deuxièmes connecteurs complémentaires, chacun étant fixé au boîtier 32 et associé à un port de communication respectif.

Un exemple d'un tel appareil d'interconnexion 20 est décrit dans la demande de brevet français FR 22 03629 déposée le 20 avril 2022.

Chaque radio 22, 24 est connue en soi, et est typiquement une radio militarisée lorsque l'opérateur 12 est un fantassin.

Le système d'intercommunication 26 est connu en soi, et est également appelé système d'interphonie. Un exemple d'un tel système d'intercommunication 26 est décrit dans le document FR 2 988 543 A1 publié le 27 septembre 2013. Le système d'intercommunication 26 est typiquement un système d'interphonie militarisé lorsque l'opérateur 12 est un fantassin.

Le câble de connexion 30 selon l'invention est un câble de connexion d'un équipement audio 14, 22, 24, 26 respectif avec l'appareil électronique d'interconnexion 20.

Chaque câble de connexion 30 comprend un premier connecteur A1 configuré pour être couplé avec un premier connecteur complémentaire B1 équipant l'équipement audio 14, 22, 24, 26 ; un deuxième connecteur A2 configuré pour être couplé avec un deuxième connecteur complémentaire B2 équipant l'appareil électronique d'interconnexion 20 ; et un ensemble 35 de conducteurs électriques reliant le premier connecteur A1 au deuxième connecteur A2.

Le premier connecteur A1 est un connecteur électrique militarisé 40 selon l'invention, destiné à être connecté à équipement audio 14, 22, 24, 26 respectif.

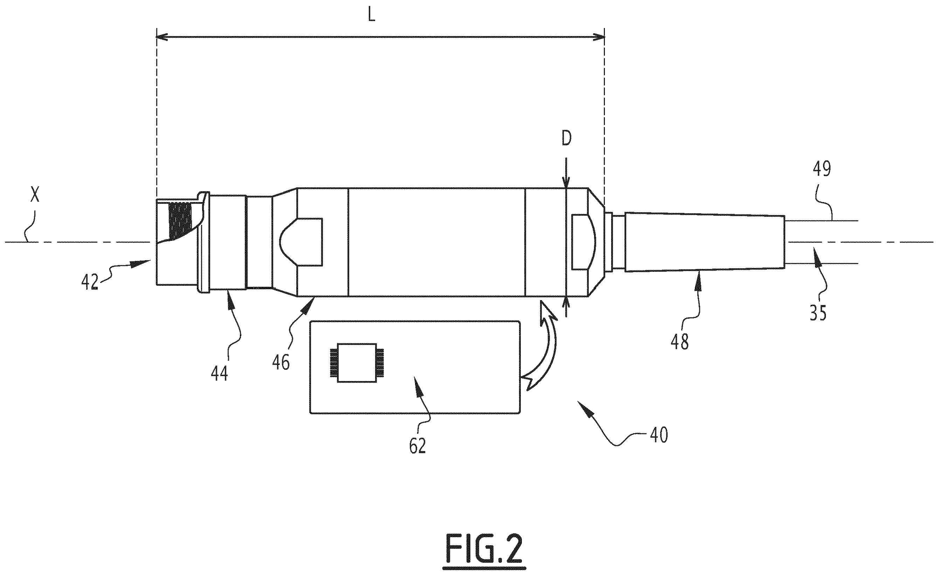

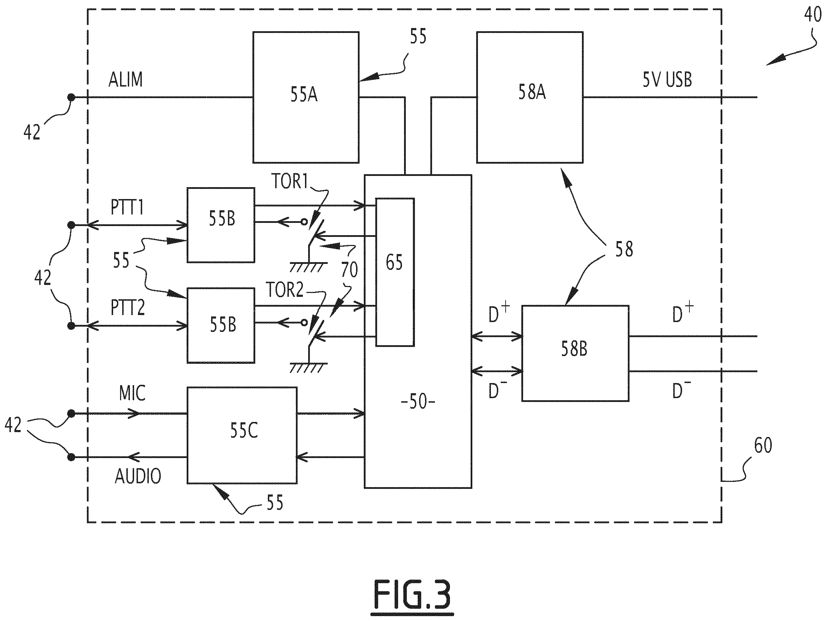

Sur la figure 2, le connecteur électrique militarisé 40 selon l'invention comprend plusieurs organes de contact électrique 42, représentés schématiquement à la figure 3, au moins un organe de contact électrique 42 étant apte à faire circuler un signal audio analogique ; un corps de connecteur 44, à l'intérieur duquel sont agencés les organes de contact électrique 42 ; et un raccord arrière 46, fixé de manière amovible au corps de connecteur 44.

En complément, le connecteur électrique militarisé 40 comprend un manchon 48 fixé à une extrémité du raccord arrière 46, opposée à l'extrémité du raccord arrière 46 qui est fixée au corps de connecteur 44. Le manchon 48 est apte à recevoir une extrémité de l'ensemble 35 de conducteurs électriques. L'ensemble 35 de conducteurs électriques est généralement entouré d'une gaine 49, telle qu'une gaine souple ou tressée, et le manchon 48 est alors apte à recevoir ladite gaine 49.

Selon l'invention, le connecteur électrique militarisé 40 comprend en outre un convertisseur analogique-numérique 50 relié à l'au moins un organe de contact électrique 42 apte à faire circuler un signal audio analogique.

Le convertisseur analogique-numérique 50 est configuré pour convertir chaque signal audio analogique en un signal numérique conforme à une norme prédéfinie de communication numérique. Le convertisseur analogique-numérique 50 est agencé à l'intérieur du raccord arrière 46.

Le deuxième connecteur A2 du câble de connexion 30 est alors conforme à la norme prédéfinie de communication numérique.

La norme prédéfinie de communication numérique est une norme USB, le convertisseur analogique-numérique 50 étant un convertisseur analogique-USB. La norme USB est par exemple choisie parmi le groupe consistant en : USB 2.0, USB audio class 1.0, USB HID.

Le connecteur électrique militarisé 40 s'étend globalement selon une direction longitudinale X, et présente selon cette direction longitudinale X une longueur L, sans tenir compte du manchon 48 éventuel, celui-ci étant souvent de longueur variable. L'homme du métier observera que la longueur L correspond alors à la longueur de la portion du connecteur électrique 40 formée du corps de connecteur 44 et du raccord arrière 46.

Dans l'exemple de la figure 2, le raccord arrière 46 présente une forme droite, et la longueur L du connecteur électrique militarisé 40, hors manchon 48, est sensiblement égale à 90 mm Dans cet exemple, l'encombrement du connecteur électrique militarisé 40 selon une direction transversale, perpendiculaire à la direction longitudinale X, correspond alors à un diamètre D du raccord arrière 46. Le diamètre D est par exemple sensiblement égal à 21 mm.

Le connecteur électrique militarisé 40 est par exemple conforme à la norme DEFENSE GAM T2 ; ou à la norme MIL-C-55116, aussi notée MIL-DTL- 55116C ; ou encore à la norme MIL-C-10544A.

En complément facultatif, le connecteur électrique militarisé 40 comprend en outre au moins un filtre de compatibilité électromagnétique 55 connecté entre le convertisseur analogique-numérique 50 et au moins un organe de contact électrique 42 correspondant, chaque filtre de compatibilité électromagnétique 55 étant configuré pour protéger le convertisseur analogique-numérique 50 contre une perturbation électromagnétique circulant via ledit au moins un organe de contact électrique 42, comme représenté sur la figure 3.

Dans l'exemple de la figure 3, le connecteur électrique militarisé 40 comprend quatre filtres de compatibilité électromagnétique 55 connectés entre des organes de contact électrique 42 respectifs et le convertisseur analogique-numérique 50, à savoir :
- un premier filtre de compatibilité électromagnétique 55A connecté entre un organe de contact électrique 42 apte à recevoir un signal d'alimentation ALIM, tel qu'un signal d'alimentation périphérique à une tension sensiblement comprise entre 2,7 V et 38 V, et le convertisseur analogique-numérique 50 ;
- deux deuxièmes filtres de compatibilité électromagnétique 55B, chacun étant connecté entre un organe de contact électrique 42 apte à recevoir un signal d'appui pour parler, également noté PTT (de l'anglais *Push To Talk*), et le convertisseur analogique-numérique 50. L'un des deuxièmes filtres de compatibilité électromagnétique 55B est associé à un premier signal d'appui pour parler, noté PTT1, et l'autre des deuxièmes filtres de compatibilité électromagnétique 55B est associé à un deuxième signal d'appui pour parler, noté PTT2 ;
- un troisième filtre de compatibilité électromagnétique 55C connecté entre des organes de contact électrique 42 apte faire circuler des signaux audio analogiques, tels qu'un signal audio de microphone MIC et un signal audio de sortie AUDIO, et le convertisseur analogique-numérique 50.

En complément facultatif encore, le connecteur électrique militarisé 40 comprend en outre au moins un filtre complémentaire de compatibilité électromagnétique 58 connecté en sortie du convertisseur analogique-numérique 50, c'est-à-dire entre le convertisseur analogique-numérique 50 et l'ensemble 35 de conducteurs électriques du câble de connexion 30.

Dans l'exemple de la figure 3, le connecteur électrique militarisé 40 comprend deux filtres complémentaires de compatibilité électromagnétique 58 connectés en sortie du convertisseur analogique-numérique 50, à savoir :
- un premier filtre complémentaire de compatibilité électromagnétique 58A associé à un signal d'alimentation en sortie, selon la norme prédéfinie de communication numérique, tel qu'un signal d'alimentation de tension sensiblement égale à 5 V lorsque la norme prédéfinie de communication numérique est la norme USB ;
- un deuxième filtre complémentaire de compatibilité électromagnétique 58B associé à des signaux de données en sortie, tels que les signaux D+ et D- lorsque la norme prédéfinie de communication numérique est la norme USB.

En complément facultatif encore, le connecteur électrique militarisé 40 comprend en outre un blindage électromagnétique 60 entourant le convertisseur analogique-numérique 50 et chaque filtre de compatibilité électromagnétique 55. Le blindage électromagnétique 60 forme une cage de Faraday autour du convertisseur analogique-numérique 50 et de chaque filtre de compatibilité électromagnétique 55.

Lorsque le connecteur électrique militarisé 40 comprend en outre un ou plusieurs filtres complémentaires de compatibilité électromagnétique 58, le blindage électromagnétique 60 entoure de préférence aussi ce ou ces filtres complémentaires 58, de manière à former la cage de Faraday également autour de ce ou ces filtres complémentaires 58.

Le convertisseur analogique-numérique 50, ainsi qu'en complément facultatif le ou les filtres de compatibilité électromagnétique 55 et/ou les filtres complémentaires de compatibilité électromagnétique 58, sont réalisés sous forme d'une unique carte électronique 62, visible à la figure 2.

Dans l'exemple de la figure 3, le convertisseur analogique-numérique 50 est à la fois conforme au fonctionnement à pleine vitesse USB 2. 0 et à la spécification de classe de périphérique audio USB v1.0.

Le convertisseur analogique-numérique 50 est configuré en outre pour prendre en charge le mode suspension/reprise USB et le réveil à distance avec des broches de contrôle du volume, non représentées.

Les broches de contrôle du volume, telles que les broches d'augmentation du volume, de diminution du volume et de sourdine de lecture, sont en outre adaptées pour prendre en charge la classe de périphérique USB HID pour la synchronisation du contrôle du convertisseur.

En complément ou en variante, le convertisseur analogique-numérique 50 est configuré pour prendre en charge les formats AES/EBU, IEC60958, S/PDIF pour les données PCM stéréo à la sortie S/PDIF.

Le convertisseur analogique-numérique 50 inclut par exemple une interface USB, un processeur de sortie, et un processeur d'entrée.

En complément encore, le convertisseur analogique-numérique 50 inclut un mécanisme de protection contre les décharges électrostatiques, également appelé mécanisme de protection ESD (de l'anglais *ElectroStatic Discharge*).

En complément facultatif encore, le convertisseur analogique-numérique 50 comporte en outre un circuit intégré de réduction du bruit.

Le convertisseur analogique-numérique 50 est par exemple configuré pour mettre en oeuvre un taux d'échantillonnage de 48KHz / 44,1KHz pour la lecture / l'enregistrement.

Lorsqu'un organe de contact électrique 42 est configuré pour faire transiter au moins un signal d'appui pour parler PTT pour l'autorisation d'émission d'un signal audio, le convertisseur analogique-numérique 50 comprend de préférence en outre un module de gestion 65 configuré pour gérer chaque signal d'appui pour parler PTT transitant via ledit organe de contact électrique 42.

Chaque filtre de compatibilité électromagnétique 55 comporte un condensateur et une bobine électromagnétique connectés en série, non représentés. Optionnellement, chaque filtre de compatibilité électromagnétique 55 comporte en outre un composant de protection, non représenté, connecté entre ledit au moins un organe de contact électrique 42 et une masse électrique. Ce composant de protection comporte typiquement au moins une bobine électromagnétique ou une ferrite.

Le premier filtre de compatibilité électromagnétique 55A est configuré en outre pour effectuer une régulation de tension entre la valeur de la tension reçue en entrée, sensiblement comprise entre 2,7 V et 38 V, et une tension de sortie sensiblement égale à 5 V fournie au convertisseur analogique-numérique 50.

Le troisième filtre de compatibilité électromagnétique 55C est configuré en outre pour effectuer une adaptation audio, telle qu'une adaptation d'impédance et/ou une adaptation d'une amplitude du ou des signaux audio.

Le deuxième filtre complémentaire de compatibilité électromagnétique 58B est configuré en outre pour effectuer un filtrage selon la norme prédéfinie de communication numérique, tel qu'un filtrage USB.

Chaque filtre complémentaire de compatibilité électromagnétique 58 comporte de manière analogue un condensateur et une bobine électromagnétique connectés en série, non représentés. Optionnellement, chaque filtre complémentaire de compatibilité électromagnétique 58 comporte en outre un composant de protection, non représenté, connecté entre ledit au moins un organe de contact électrique 42 et une masse électrique. Ce composant de protection comporte typiquement au moins une bobine électromagnétique ou une ferrite.

La carte électronique 62 présente un encombrement réduit pour être facilement agencée à l'intérieur du raccord arrière 46. La carte électronique 62 présente par exemple des dimensions sensiblement égales à 37 mm en longueur, 16 mm en largeur et 1,6 mm en épaisseur.

Le module de gestion 65 est configuré pour utiliser un protocole USB HID (de l'anglais *Universal Serial Bus Human Interface Devices*) pour piloter une ou plusieurs entrées/sorties de type tout ou rien, également notées TOR, qui elles-mêmes sont aptes à piloter chacune un signal d'appui pour parler PTT respectif.

Dans l'exemple de la figure 3, le module de gestion 65 est configuré pour utiliser le protocole USB HID pour piloter deux entrées/sorties de type tout ou rien 70, une première entrée/sortie tout ou rien TOR1 étant associée au premier signal d'appui pour parler PTT1 et une deuxième entrée/sortie tout ou rien TOR2 étant associée au deuxième signal d'appui pour parler PTT2.

Le module de gestion 65 est par exemple configuré pour convertir un signal d'appui pour parler PTT reçu selon la norme prédéfinie de communication numérique en une commande tout ou rien pour une sortie d'une entrée/sortie tout ou rien 70 respective, visible à la figure 3 ; et inversement pour convertir un signal d'appui pour parler PTT reçu d'une entrée d'une entrée/sortie tout ou rien 70 respective en un signal selon la norme prédéfinie de communication numérique.

La commande tout ou rien 70 est par exemple une commande tout ou rien sur des transistors MOS à drain ouvert.

Ainsi, le connecteur électrique militarisé 40 selon l'invention permet, de par son convertisseur analogique-numérique 50, d'effectuer la conversion de signaux audio en signaux numériques conformes à la norme prédéfinie de communication numérique, telle que la norme USB.

Le connecteur électrique militarisé 40 autorise alors une connexion facilitée de l'équipement audio 14, 22, 24, 26 à l'appareil électronique d'interconnexion 20, en particulier à un port de communication de ce dernier qui est conforme à ladite norme de communication numérique.

Le connecteur électrique militarisé 40 permet en particulier de connecter l'équipement audio de type analogique directement au port de communication de type numérique de l'appareil électronique d'interconnexion 20, le connecteur électrique militarisé 40 faisant alors l'interface entre les signaux analogiques de l'équipement audio 14, 22, 24, 26 et les signaux numériques de l'appareil électronique d'interconnexion 20.

L'équipement audio 14, 22, 24, 26 est aussi apte à échanger, via le connecteur électrique militarisé 40 et selon la norme de communication numérique, des informations d'initialisation appropriées avec l'appareil d'interconnexion 20, notamment des informations permettant d'identifier l'équipement audio 14, 22, 24, 26 auprès de l'appareil d'interconnexion 20.

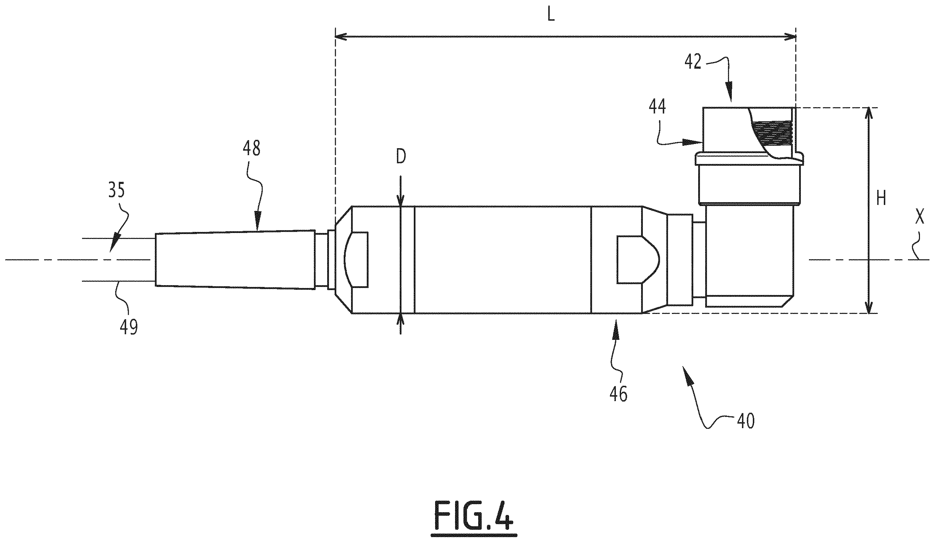

La figure 4 illustre un deuxième mode de réalisation pour lequel les éléments analogues à ceux du premier mode de réalisation décrit précédemment, sont repérés par des références identiques, et ne sont pas décrits à nouveau.

Selon le deuxième mode de réalisation, le raccord arrière 46 du connecteur électrique militarisé 40 présente une forme coudée. Le connecteur électrique militarisé 40 présente alors selon ce deuxième mode de réalisation une longueur L typiquement plus faible que celle selon le premier mode de réalisation.

Dans l'exemple de la figure 4, la longueur L du connecteur électrique militarisé 40, hors manchon 48, est sensiblement égale à 82 mm. Dans cet exemple, l'encombrement du connecteur électrique militarisé 40 selon une direction transversale, perpendiculaire à la direction longitudinale X, correspond alors à une hauteur H. La hauteur H est par exemple sensiblement égale à 40 mm.

Dans l'exemple de la figure 4, le diamètre D du raccord arrière 46 est par exemple sensiblement égal à 21 mm, de manière identique au premier mode de réalisation.

Le fonctionnement du connecteur électrique militarisé 40 selon ce deuxième mode de réalisation est identique à celui du connecteur électrique militarisé 40 selon le premier mode de réalisation, et n'est donc pas décrit à nouveau.

Les avantages du connecteur électrique militarisé 40 selon ce deuxième mode de réalisation sont identiques à ceux du connecteur électrique militarisé 40 selon le premier mode de réalisation, et ne sont donc pas décrits à nouveau.

On conçoit ainsi que le connecteur électrique militarisé 40 selon l'invention permet de faciliter la connexion des différents équipements audio 14, 22, 24, 26, notamment avec l'appareil d'interconnexion 20.

## Revendications

1. Connecteur électrique militarisé (40), destiné à être connecté à un équipement audio (14, 22, 24, 26), le connecteur électrique (40) comprenant :
- plusieurs organes de contact électrique (42), au moins un organe de contact électrique (42) étant apte à faire circuler un signal audio analogique ;
- un corps de connecteur (44), à l'intérieur duquel sont agencés les organes de contact électrique (42) ;
- un raccord arrière (46), fixé de manière amovible au corps de connecteur (44) ;
**caractérisé en ce qu'**il comprend en outre :
- un convertisseur analogique-numérique (50) relié à l'au moins un organe de contact électrique (42) apte à faire circuler un signal audio analogique, le convertisseur analogique-numérique (50) étant configuré pour convertir chaque signal audio analogique en un signal numérique conforme à une norme prédéfinie de communication numérique, le convertisseur analogique-numérique (50) étant agencé à l'intérieur du raccord arrière (46).

2. Connecteur (40) selon la revendication 1, dans lequel la norme prédéfinie de communication numérique est une norme USB, le convertisseur analogique-numérique (50) étant un convertisseur analogique-USB.

3. Connecteur (40) selon la revendication 1 ou 2, dans lequel la norme USB est choisie parmi le groupe consistant en : USB 2.0 ; USB audio class 1.0 ; et USB HID.

4. Connecteur (40) selon l'une quelconque des revendications précédentes, dans lequel le connecteur (40) comprend en outre au moins un filtre de compatibilité électromagnétique (55) connecté entre le convertisseur analogique-numérique (50) et au moins un organe de contact électrique (42) correspondant, chaque filtre de compatibilité électromagnétique (55) étant configuré pour protéger le convertisseur analogique-numérique (50) contre une perturbation électromagnétique circulant via ledit au moins un organe de contact électrique (42) ;
le connecteur (40) comprenant de préférence en outre un blindage électromagnétique (60) entourant le convertisseur analogique-numérique (50) et chaque filtre de compatibilité électromagnétique (55), le blindage électromagnétique (60) formant une cage de Faraday autour du convertisseur analogique-numérique (50) et de chaque filtre de compatibilité électromagnétique (55).

5. Connecteur (40) selon la revendication précédente, dans lequel chaque filtre de compatibilité électromagnétique (55) comporte un condensateur et une bobine électromagnétique connectés en série ;
chaque filtre de compatibilité électromagnétique (55) comportant de préférence en outre un composant de protection connecté entre ledit au moins un organe de contact électrique (42) et une masse électrique ;
le composant de protection comportant de préférence encore au moins une bobine électromagnétique ou une ferrite.

6. Connecteur (40) selon l'une quelconque des revendications précédentes, dans lequel un organe de contact électrique (42) est configuré pour faire transiter au moins un signal d'appui pour parler (PTT) pour l'autorisation d'émission d'un signal audio, et le convertisseur analogique-numérique (50) comprend en outre un module de gestion (65) configuré pour gérer chaque signal d'appui pour parler (PTT) transitant via ledit organe de contact électrique (42) ;
le module de gestion (65) étant de préférence configuré pour convertir un signal d'appui pour parler (PTT) reçu selon la norme prédéfinie de communication numérique en une commande tout ou rien, telle qu'une commande tout ou rien sur des transistors MOS à drain ouvert ; et inversement pour convertir un signal d'appui pour parler (PTT) reçu d'une entrée tout ou rien en un signal selon la norme prédéfinie de communication numérique.

7. Connecteur (40) selon l'une quelconque des revendications précédentes, dans lequel le connecteur (40) est conforme à une norme choisie parmi le groupe consistant en : DEFENSE GAM T2, MIL-C-55116, et MIL-C-10544A.

8. Connecteur (40) selon l'une quelconque des revendications précédentes, dans lequel le raccord arrière (46) présente une forme droite ou une forme coudée.

9. Câble (30) de connexion d'un équipement audio (14, 22, 24, 26) avec un appareil électronique d'interconnexion (20), le câble de connexion (30) comprenant :
- un premier connecteur (A1) configuré pour être couplé avec un premier connecteur complémentaire (B1) équipant l'équipement audio (14, 22, 24, 26) ;
- un deuxième connecteur (A2) configuré pour être couplé avec un deuxième connecteur complémentaire (B2) équipant l'appareil électronique d'interconnexion (20) ;
- un ensemble (35) de conducteurs électriques reliant le premier connecteur (A1) au deuxième connecteur (A2) ;
**caractérisé en ce que** le premier connecteur (A1) est selon l'une quelconque des revendications précédentes, et le deuxième connecteur (A2) est conforme à la norme prédéfinie de communication numérique.

10. Système audio (10) destiné à équiper un opérateur, notamment un fantassin, le système audio (10) comprenant :
- un équipement audio (14, 22, 24, 26) ; et
- un appareil électronique d'interconnexion (20) connecté à l'équipement audio (14, 22, 24, 26) via un câble de connexion (30), l'appareil électronique d'interconnexion (20) étant destiné à être connecté à au moins un autre équipement audio (14, 22, 24, 26) ;
chaque équipement audio (14, 22, 24, 26) étant choisi parmi le groupe consistant en : une radio (22, 24), un système d'intercommunication (26), et un équipement de tête (14) comportant au moins un élément parmi un microphone (16) et un module de restitution audio (18) ;
**caractérisé en ce que** le câble de connexion (30) est selon la revendication précédente.

## Revendications modifiées

### Revendications modifiées conformément à la règle 137(2) CBE.

1. Connecteur électrique militarisé (40), destiné à être connecté à un équipement audio (14, 22, 24, 26), le connecteur électrique (40) comprenant :
- plusieurs organes de contact électrique (42), au moins un organe de contact électrique (42) étant apte à faire circuler un signal audio analogique, et au moins un organe de contact électrique (42) étant configuré pour faire transiter au moins un signal d'appui pour parler (PTT) pour l'autorisation d'émission d'un signal audio ;
- un corps de connecteur (44), à l'intérieur duquel sont agencés les organes de contact électrique (42) ;
- un raccord arrière (46), fixé de manière amovible au corps de connecteur (44) ; **caractérisé en ce qu'**il comprend en outre :
- un convertisseur analogique-numérique (50) relié à l'au moins un organe de contact électrique (42) apte à faire circuler un signal audio analogique, le convertisseur analogique-numérique (50) étant configuré pour convertir chaque signal audio analogique en un signal numérique conforme à une norme prédéfinie de communication numérique, le convertisseur analogique-numérique (50) étant agencé à l'intérieur du raccord arrière (46), le convertisseur analogique-numérique (50) comprenant en outre un module de gestion (65) configuré pour gérer chaque signal d'appui pour parler (PTT) transitant via ledit organe de contact électrique (42), le module de gestion (65) étant configuré pour convertir un signal d'appui pour parler (PTT) reçu selon la norme prédéfinie de communication numérique en une commande tout ou rien ; et inversement pour convertir un signal d'appui pour parler (PTT) reçu d'une entrée tout ou rien en un signal selon la norme prédéfinie de communication numérique.

2. Connecteur (40) selon la revendication 1, dans lequel la norme prédéfinie de communication numérique est une norme USB, le convertisseur analogique-numérique (50) étant un convertisseur analogique-USB.

3. Connecteur (40) selon la revendication 1 ou 2, dans lequel la norme USB est choisie parmi le groupe consistant en : USB 2.0 ; USB audio class 1.0 ; et USB HID.

4. Connecteur (40) selon l'une quelconque des revendications précédentes, dans lequel le connecteur (40) comprend en outre au moins un filtre de compatibilité électromagnétique (55) connecté entre le convertisseur analogique-numérique (50) et au moins un organe de contact électrique (42) correspondant, chaque filtre de compatibilité électromagnétique (55) étant configuré pour protéger le convertisseur analogique-numérique (50) contre une perturbation électromagnétique circulant via ledit au moins un organe de contact électrique (42) ;
le connecteur (40) comprenant de préférence en outre un blindage électromagnétique (60) entourant le convertisseur analogique-numérique (50) et chaque filtre de compatibilité électromagnétique (55), le blindage électromagnétique (60) formant une cage de Faraday autour du convertisseur analogique-numérique (50) et de chaque filtre de compatibilité électromagnétique (55).

5. Connecteur (40) selon la revendication précédente, dans lequel chaque filtre de compatibilité électromagnétique (55) comporte un condensateur et une bobine électromagnétique connectés en série ;
chaque filtre de compatibilité électromagnétique (55) comportant de préférence en outre un composant de protection connecté entre ledit au moins un organe de contact électrique (42) et une masse électrique ;
le composant de protection comportant de préférence encore au moins une bobine électromagnétique ou une ferrite.

6. Connecteur (40) selon l'une quelconque des revendications précédentes, dans lequel le connecteur (40) est conforme à une norme choisie parmi le groupe consistant en : DEFENSE GAM T2, MIL-C-55116, et MIL-C-10544A.

7. Connecteur (40) selon l'une quelconque des revendications précédentes, dans lequel le raccord arrière (46) présente une forme droite ou une forme coudée.

8. Câble (30) de connexion d'un équipement audio (14, 22, 24, 26) avec un appareil électronique d'interconnexion (20), le câble de connexion (30) comprenant :
- un premier connecteur (A1) configuré pour être couplé avec un premier connecteur complémentaire (B1) équipant l'équipement audio (14, 22, 24, 26) ;
- un deuxième connecteur (A2) configuré pour être couplé avec un deuxième connecteur complémentaire (B2) équipant l'appareil électronique d'interconnexion (20) ;
- un ensemble (35) de conducteurs électriques reliant le premier connecteur (A1) au deuxième connecteur (A2) ;
**caractérisé en ce que** le premier connecteur (A1) est selon l'une quelconque des revendications précédentes, et le deuxième connecteur (A2) est conforme à la norme prédéfinie de communication numérique.

9. Système audio (10) destiné à équiper un opérateur, notamment un fantassin, le système audio (10) comprenant :
- un équipement audio (14, 22, 24, 26) ; et
- un appareil électronique d'interconnexion (20) connecté à l'équipement audio (14, 22, 24, 26) via un câble de connexion (30), l'appareil électronique d'interconnexion (20) étant destiné à être connecté à au moins un autre équipement audio (14, 22, 24, 26) ;
chaque équipement audio (14, 22, 24, 26) étant choisi parmi le groupe consistant en : une radio (22, 24), un système d'intercommunication (26), et un équipement de tête (14) comportant au moins un élément parmi un microphone (16) et un module de restitution audio (18) ;
**caractérisé en ce que** le câble de connexion (30) est selon la revendication précédente.
